(19) **Europäisches Patentamt**
**European Patent Office**
**Office européen des brevets**

(11) **EP 3 481 969 B1**

(12) **EUROPEAN PATENT SPECIFICATION**

(45) Date of publication and mention
of the grant of the patent:
**13.05.2020 Bulletin 2020/20**

(51) Int Cl.:
*C22B 1/14* *(2006.01)*  *C22B 1/20* *(2006.01)*
*C22B 1/243* *(2006.01)*  *C22B 23/02* *(2006.01)*
*C22C 1/02* *(2006.01)*  *C22C 19/05* *(2006.01)*
*C22C 27/06* *(2006.01)*  *C22C 35/00* *(2006.01)*
*C22B 34/32* *(2006.01)*

(21) Application number: **17752410.5**

(22) Date of filing: **10.07.2017**

(86) International application number:
**PCT/FI2017/050530**

(87) International publication number:
**WO 2018/011469 (18.01.2018 Gazette 2018/03)**

(54) **PROCESS FOR MANUFACTURING CHROMIUM AND IRON BEARING AGGLOMERATES WITH DIFFERENT ADDITION OF MANGANESE, NICKEL AND MOLYBDENUM BEARING MATERIALS**

VERFAHREN ZUR HERSTELLUNG VON CHROM- UND EISENHALTIGEN AGGLOMERATEN MIT UNTERSCHIEDLICHER ZUGABE VON MANGAN-, NICKEL- UND MOLYBDÄNHALTIGEN MATERIALIEN

PROCÉDÉ DE FABRICATION D'AGRÉGATS CONTENANT DU CHROME ET DU FER AVEC ADDITION DE DIVERS MATÉRIAUX CONTENANT DU MANGANÈSE, DU NICKEL ET DU MOLYBDÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2016 FI 20165582**

(43) Date of publication of application:
**15.05.2019 Bulletin 2019/20**

(73) Proprietor: **Outotec (Finland) Oy**
**02230 Espoo (FI)**

(72) Inventors:
• **MÄKELÄ, Pasi**
**28430 Pori (FI)**

• **PALOVAARA, Petri**
**28220 Pori (FI)**
• **PISILÄ, Sauli**
**90520 Oulu (FI)**
• **SAARENMAA, Jarmo**
**28220 Pori (FI)**

(74) Representative: **Papula Oy**
**P.O. Box 981**
**00101 Helsinki (FI)**

(56) References cited:
**WO-A1-2010/092234  WO-A1-2015/092136**
**WO-A1-2015/092138  CN-B- 103 667 690**
**US-A1- 2014 037 489**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a process for manufacturing chromium and iron bearing agglomerates with desired content of manganese, nickel and molybdenum.

Desired means in this context the composition of the chromium and iron bearing agglomerates that results from the process by using different additions of manganese, nickel and molybdenum bearing materials. The agglomerates can for example be used in the manufacture of ferrochromium alloy. Agglomerate comprises pellets, briquettes, sinter and the treatment with known methods.

From prior art, mixtures of different raw materials are known for producing agglomerates for the manufacture of ferrochromium alloys. WO 2010/092234 A1 discloses a process for manufacturing iron and chromium bearing agglomerates with a desired content of nickel. WO 2015/092138 A1 discloses a method for producing manganese containing ferroalloy agglomerates. WO 2015/092136 A1 describes in general terms information about producing pellets for the same purpose. CN 10366790 B discloses a method for producing self-reducing pellets comprising ferrochromium, molybdenum and manganese in certain amounts. In US 2014/037489 A1, a dry-press powder metallurgy process in which workpieces are produced, is discussed.

The main alloying components of stainless steel are iron, chromium, manganese, nickel and molybdenum. Steels are well recyclable and significant part of the stainless steel making is based on stainless and carbon steel scrap. Yet, in this method, virgin feed of key elements is also required for achieving desired grades and for diluting possible impurities enriching in the recycling of steel. As an example of melting batch of a lean 300 series stainless steel from scrap metals can be following: 50 wt-% of 300 series scrap (18 wt-%Cr, 8 wt-% Ni, 1 wt-% Mn) ; 30 wt-% of carbon steel scrap (mostly Fe) ; 14 wt-% of high carbon FeCr (7 wt-%C, 65 wt-% Cr); 4 wt-% of nickel briquettes (mostly Ni) and 1 wt-% high carbon FeMn (7 wt-%, 65 wt-% Mn). This mixture will end up in composition of about 18 wt-% Cr, 8 wt-% Ni, 1 wt-% Mn and 1 wt-% C. The most common stainless steel series, 300 comprises mainly iron, chromium and nickel. The nickel content in austenitic stainless steel is most often around 8-12 wt-% (300 series) and manganese is typically limited to 2 wt-% but there is variation between different grades. Nickel is an expensive raw material and its availability and price varies with time. Nickel sources used in stainless steel making are typically acid-proof scrap, ferronickel and pure nickel cathodes. Because of the above reason, certain stainless steel grades such as the 200 and part of duplex series, nickel is at least partly substituted by cheaper manganese. Manganese source is typically ferromanganese, electrolytical manganese or silicomanganese in these stainless steel series. For example in the 200 series the nickel content is lower, typically at 0-7 wt-% and for special stainless steel nickel content is even up to 30 wt-%. Stainless steel series comprising molybdenum are so called acid-proof steels. Molybdenum content in acid-proof stainless steel are typically 2-3 wt-%, but can also be higher.

Chromium form a surface film of chromium oxide to make the stainless steel corrosion resistant. Chromium also increases the scaling resistance at elevated temperatures. Therefore, chromium is the key element in stainless steel and is inevitable to add into stainless steels.

Manganese promotes the stability of austenite structure and improves hot rolling properties. Addition of up to 2 wt-% manganese has no effect on strength, ductility and toughness and this manganese content is set to be the upper limit for 300 series stainless steels. Manganese is important as a partial replacement of nickel in 200 series stainless grades.

Nickel stabilizes the austenitic structure and increases ductility, making good formability of austenitic stainless steels. Nickel also increases high temperature strength and corrosion resistance, particularly in industrial and marine atmospheres, chemical, food and textile processing industries.

Molybdenum increases corrosion resistance, strength at elevated temperatures and creep resistance. It expands the range of passivity and counteracts tendency to pit corrosion in chloride environments.

An object of the invention is to provide a process for flexible manufacturing chromium and iron bearing agglomerates with desired content of manganese, nickel and molybdenum that improve and facilitate the manufacture of ferroalloy with controllable content of manganese, nickel and molybdenum alloy in a cost-effective way. Another object of the invention is to provide high efficient and profitable manganese, nickel and molybdenum for the production of stainless steel in an easy to use form. The invention enables the use of cheaper manganese, nickel and molybdenum sources compared to the typical sources used in the stainless steel alloying step.

The process according to the present invention is characterized by what is presented in claim 1.

Some embodiments of the process are presented in the dependent claims 2 to 39. The invention relates also to the use of the agglomerates manufactured according to any of the claims 1 to 38 in the production of steel.

The invention relates also to the use of the agglomerates manufactured according to any of the claims 1 to 38 in the production of stainless steel.

The inventio relates also to sintered pellets as defined in claim 40 and to the use of the sintered pellets as defined in claim 43.

More precisely, the new process can comprise the steps of providing an agglomeration feed comprising chromite i.e. chromium and iron bearing material and possible other chromium bearing raw material, possible other iron bearing raw material, possible manganese-bearing raw material, possible nickel-bearing raw material, possible molybdenum-bearing raw material, binding agent, possible fluxes (such as silicon, calcium, aluminium, magnesium and/or iron bearing oxide material including mining products, pyrometallurgical slags, dusts and other convenient residuals) and possible additional chemical energy bearing materials (such as silicon carbide, metallurgical dusts, ferroalloy fines, metallic fines like aluminium powder, millscale or similar oxidizable bearing materials), wherein the agglomeration feed having a manganese content up to 35.0 wt-%; nickel content up to 30.0 wt-%; molybdenum content up to 30.0 wt-%; agglomerating the agglomeration feed to obtain agglomerates.

The process may include pelletizing the agglomeration feed to obtain green pellets and also possible sintering or other heat-treatment of the green pellets to obtain sintered pellets. Sintering may be also referred as induration or hardening.

The process may include sintering the agglomerate feed to obtain sinter.

The process may include briquetting the agglomeration feed to obtain briquettes. Briquettes may bound by clay-minerals or cement type materials with or without heat-treatment by known methods or by the way that skilled person can utilize.

In some stainless steel grades also copper and niobium are alloyed in small quantities. The agglomeration feed can for example comprise below 30 wt-% of niobium. In order to increase the alloys copper or niobium content, copper bearing raw material or niobium-bearing raw material may also be added to the agglomeration mix.

Copper is added to stainless steels to increase their resistance to certain corrosive environments. Copper also decreases susceptibility to stress corrosion cracking and provides age-hardening effect.

Niobium combines with carbon to reduce susceptibility to intergranular corrosion. Niobium acts as a grain refiner and promotes the formation of ferrite.

The content of manganese, nickel and molybdenum in the agglomeration feed may be selected based on the end product (stainless steel) requirements concluding the minimized need of conventional, more expensive materials such as FeMn, SiMn, FeNi, Ni-briquettes or FeMo. Also the produced ferroalloy with desired content of manganese, nickel and molybdenum can be later diluted with scrap addition or adjusted with traditional alloying substances in the downstream process steps. In addition part of the produced ferroalloy with desired content of manganese, nickel and molybdenum can be diluted already in agglomeration feed by adding iron-bearing material into the feed concluding to lower need of scrap iron or other iron sources in the refining stage after the ferroalloy smelting. Examples of the composition of different types of stainless steel series are presented in Tables 1-4.

EP 3 481 969 B1

TABLE 1: CHEMICAL COMPOSITION OF SOME REGISTERED 200-SERIES GRADES

| AISI | 201 | | 201IN | | 202 | 203 | 204 | | 205 | 214 | 216 | | |
|---|---|---|---|---|---|---|---|---|---|---|---|---|---|
| UNS | S20100 | S20103 | S20153 | S20161 | S20200 | S20300 | S20400 | S20430 | S20500 | S21400 | S21600 | S21603 | S24000 |
| Cr | 16.0 - 18.0 | 16.0 - 18.0 | 16.0 - 17.5 | 15.0 - 18.0 | 17.0 - 19.0 | 16.0 - 18.0 | 15.0 - 17.0 | 15.5 - 17.5 | 15.5 - 17.5 | 17.0 - 18.5 | 17.5 - 22.0 | 17.5 - 22.0 | 17.0 - 19.0 |
| Mn | 5.5 - 7.5 | 5.5 - 7.5 | 6.4 - 7.5 | 4.0 - 6.0 | 7.5 - 10.0 | 5.0 - 6.5 | 7.0 - 9.0 | 6.5 - 9.0 | 14.0 - 15.5 | 14.0 - 16.0 | 7.5-9.0 | 7.5 - 9.0 | 11.5 - 14.5 |
| Ni | 3.5 - 5.5 | 3.5 - 5.5 | 4.0 - 5.0 | 4.0 - 6.0 | 4.0 - 6.0 | 4.0 - 6.0 | 1.5 - 3.0 | 1.5 - 3.5 | 1.5 - 3.5 | 1.0 max. | 5.0 - 7.0 | 5.0 - 7.0 | 2.25 - 3.75 |
| N | 0.25 max. | 0.25 max. | 0.10 - 0.25 | 0.08 - 0.20 | 0.25 max. | - | 0.15 - 0.30 | 0.05 - 0.25 | 0.32 - 0.40 | 0.35 min. | 0.25 - 0.50 | 0.25 - 0.50 | 0.20 - 0.40 |
| C | 0.15 max. | 0.03 max. | 0.03 max. | 0.15 max. | 0.15 max. | 0.08 max. | 0.03 max. | 0.15 max. | 0.12 - 0.25 | 0.12 max. | 0.08 max. | 0.03 max. | 0.08 max. |
| S | 0.030 max. | 0.030 max. | 0.030 max. | 0.040 max. | 0.030 max. | 0.18 - 0.35 | 0.030 max. | 0.030 max. | 0.030 max. | 0.030 max. | 0.030 max. | 0.030 max. | 0.030 max. |
| Others | | | Cu 1.0 max. | | | Cu 1.75 - 2.25 | | Cu 2.0 - 4.0 | | | Mo 2.0 - 3.0 | Mo 2.0 - 3.0 | |

Table 2: CHEMICAL COMPOSITION OF SOME REGISTERED 300-SERIES GRADES (in wt-%)

| AISI | C | N | Cr | Ni | Mo | Mn | Si | Other | Other | Other |
|------|------|------|------|------|------|------|------|--------|--------|--------|
| 301 tensile | 0.08 | 0.4 | 16.6 | 6.8 | 0.2 | 1.0 | 0.45 | 0.001 S | 0.03 P | 0.3 Cu |
| 301 drawing | 0.08 | 0.04 | 17.4 | 7.4 | 0.02 | 1.7 | 0.4 | 0.007 S | 0.03 P | 0.6 Cu |
| 303 | | | | | | | | | | |
| 304 | 0.05 | 0.05 | 18.3 | 8.1 | 0.3 | 1.8 | 0.45 | 0.001 S | 0.03 P | 0.3 Cu |
| 304 drawing | 0.05 | 0.04 | 19.4 | 8.6 | 0.3 | 1.8 | 0.45 | 0.001 S | 0.03 P | 0.3 Cu |
| 304 extra drawing | 0.06 | 0.04 | 19.3 | 9.1 | 0.3 | 1.8 | 0.45 | 0.001 S | 0.030 P | 0.4 Cu |
| 304L tubing | 0.02 | 0.09 | 18.3 | 8.1 | 0.3 | 1.8 | 0.45 | 0.013 S | 0.030 P | 0.4 Cu |
| 305 | 0.05 | 0.02 | 18.8 | 12.1 | 0.2 | 0.8 | 0.60 | 0.001 S | 0.02 P | 0.2 Cu |
| 321 | 0.05 | 0.10 | 17.7 | 9.1 | 0.03 | 1.0 | 0.45 | 0.001 S | 0.03 P | 0.4 Ti |
| 316L | 0.02 | 0.0 | 16.4 | 10.5 | 2.1 | 1.8 | 0.50 | 0.001 S | 0.03 P | 0.4 Cu |

Table 3: CHEMICAL COMPOSITION OF SOME REGISTERED 400-SERIES GRADES (in wt-%)

| AISI | C | Cr | Ni | Mo | N | Mn | Cu |
|------|-------|-------------|------|-------------|-------|------|-----|
| 409 | 0.030 | 10.5 - 11.7 | 0.50 | - | 0.030 | 1.0 | - |
| 405 | 0.08 | 11.5 - 14.5 | 0.60 | - | - | 1.0 | - |
| 430 | 0.12 | 16.0 - 18.0 | 0.75 | - | - | 1.0 | - |
| 434 | 0.12 | 16.0 - 18.0 | - | 0.75 - 1.25 | - | 1.0 | - |
| 436 | 0.12 | 17.9 - 19.0 | - | 0.75 - 1.25 | - | 1.0 | - |
| 439 | 0.030 | 17.5 - 19.5 | 0.50 | - | 0.030 | 1.0 | - |
| 444 | 0.025 | 25.0 - 28.0 | 1.00 | 1.75 - 2.50 | 0.035 | 1.0 | - |

Table 4: CHEMICAL COMPOSITION OF SOME REGISTERED DUPLEX STAINLESS STEEL GRADES (in wt-%)

| Common name | UNS No, | C | Cr | Ni | Mo | N | Mn | Cu | Other |
|---|---|---|---|---|---|---|---|---|---|
| | S31200 | 0.030 | 24.0-26.0 | 5.5-6.5 | 1.20-2.00 | 0.14-0.20 | 2.00 | - | - |
| | S31260 | 0.030 | 24.0-26.0 | 5.5-7.5 | 2.5-3.5 | 0.10-0.30 | 1.00 | 0.2-0.8 | W 0.10-0.50 |
| | S32001 | 0.030 | 19.5-21.5 | 1.00-3.00 | 0.60 | 0.05-0.17 | 2.0-6.0 | 1.00 | - |
| | S32003 | 0.030 | 19.5-22.5 | 3.0-4.0 | 1.50-2.00 | 0.14-0.20 | 2.00 | - | - |
| | S32101 | 0.040 | 21.0-22.0 | 1.35-1.7 | 0.10-0.80 | 0.20-0.25 | 4.0-6.0 | 0.10-0.80 | - |
| | S32202 | 0.030 | 21.5-24.0 | 1.00-2.80 | 0.45 | 0.18-0.26 | 2.00-2.50 | - | - |
| **2304** | S32304 | 0.030 | 21.5-24.5 | 1.0-5.5 | 0.05-0.60 | 0.05-0.20 | 2.00 | 0.05-0.60 | - |
| **2205** | S31803 | 0.030 | 21.0-23.0 | 4.5-6.5 | 2.5-3.5 | 0.08-0.20 | 2.00 | - | - |
| **2205** | S32205 | 0.030 | 22.0-23.0 | 4.5-6.5 | 3.0-3.5 | 0.14-0.20 | 1.00 | - | - |
| | S32506 | 0.030 | 24.0-26.0 | 5.5-7.2 | 3.0-3.5 | 0.08-0.20 | 1.50 | - | W 0.05-0.30 |
| | S32520 | 0.030 | 24.0-26.0 | 5.5-8.0 | 3.0-4.0 | 0.20-0.35 | 1.50 | 0.50-2.00 | - |
| **255** | S32550 | 0.04 | 24.0-27.0 | 4.5-6.5 | 2.9-3.9 | 0.10-0.25 | 1.50 | 1.50-2.50 | - |
| **2507** | S325750 | 0.030 | 24.0-26.0 | 6.0-8.0 | 3.0-5.0 | 0.24-0.32 | 1.20 | 0.50 | - |
| | S325760 | 0.030 | 24.0-26.0 | 6.0-8.0 | 3.0-4.0 | 0.20-0.30 | 1.00 | 0.50-1.00 | W 0.50-1.00 |
| | S325808 | 0.030 | 27.0-27.9 | 7.0-8.2 | 0.8-1.2 | 0.30-0.40 | 1.10 | - | W 2.10-2.50 |
| | S325906 | 0.030 | 28.0-20.0 | 5.8-7-5 | 1.50-2.60 | 0.30-0.40 | 0.80-1.5 | 0.80 | - |
| | S32950 | 0.030 | 26.0-29.9 | 3.50-5.20 | 1.00-2.50 | 0.15-0.35 | 2.00 | - | - |
| | S39274 | 0.030 | 24.0-26.0 | 6.8-8.0 | 2.5-3.5 | 0.24-0.32 | 1.0 | 0.20-0.80 | W 1.50-2.50 |
| | S82011 | 0.030 | 20.5-23.5 | 1.0-2.0 | 0.10-1.00 | 0.15-0.27 | 2.0-3.0 | 0.50 | - |

It has been realized that production of ferroalloys such as ferrochromium manganese nickel molybdenum alloy from described agglomerates is a reasonable way to reduce the production costs of stainless steel grades. The natural refractoriness of chromite matrix in agglomeration feed provides good properties in agglomeration and heat-treating for manganese, nickel and molybdenum bearing material, which are otherwise separately more challenging to treat as agglomerates. The refractoriness also ensure good smelting characteristics. Especially the typical manganese containing material acts as a flux inside the agglomeration if heat-treated and enhances the compressive strength of heat-treated agglomerates. The agglomeration feed totalling in low amount of soluble elements for forming binding silicates such as calcium, silicon and aluminium bearing materials (excluding cold bonded briquettes) typically end up with the low compressive strengths of the heat-treated agglomerates at typical heat-treatment temperatures. This is typically occurring with agglomeration feed if nickel bearing materials with low impurities are used solely with chromite (with a typical binding agent). A known method is to avoid using a problematic agglomeration feed or to use solely wollastonite or calcite as fluxes to enhance compressive strengths of the heat-treated agglomerates at typical heat-treatment temperatures, but this method easily limit the use of more advantageous compositions of the agglomeration feed and the known fluxing may be insufficient due to inadequate solubility of the forming elements of the binding silicates. The novel and advantageous way combines these conventional fluxes (wollastonite and calcite), preferably 3 wt-% of wollastonite and 2 wt-% of calcite, more preferably using novel fluxing, if the content of nickel exceeds 7 wt-% in the agglomeration without sufficient amount of binding silicate forming elements (for example addition of manganese bearing material). The addition of manganese bearing material lowers the need of the conventional fluxes. Also other calcium, silicon, aluminium, magnesium or iron bearing materials such as olivine, bauxite, dolomite, pyrometallurgical slags, other fines are suitable as it occurs or as combined mixture for forming strong binding silicates between particles if added by a skilled person so that the solubility of the elements into the binding silicate is sufficient. The addition of manganese is favourable to be used in this kind of agglomeration feed. In the agglomeration feed may contain about 0.01 wt-% of manganese as naturally even if the manganese bearing material is not added. If more manganese is desired, more manganese bearing material can be added advantageously to the feed even for targeting 300 series, preferably targeting manganese containing stainless steels such as AISI 200 series. The addition of more than 5 wt-% of manganese in the agglomeration feed is advantageous for the heat-treated agglomerates strengths and minimizes the need of possible fluxes. The manganese addition together with nickel bearing material is advantageous for heat-treated agglomerates properties, it decreases the need of fluxes or more preferably eliminate the need of fluxes.

The use of at least one of the following: low cost manganese, nickel or molybdenum source enabled by this invention greatly improves the stainless steel production cost-effectiveness. Also other raw materials that contain the desired alloying elements such as copper and niobium (referred also as columbium) may be added to the agglomeration feed.

Addition of at least one of the following: manganese, nickel molybdenum bearing raw materials to chromium bearing material such as chromite concentrate when producing agglomeration feed to be further processed into mechanically durable agglomerates (heat-treatment or briquetting) is advantageous for the flexible manufacture of the corresponding ferroalloys (smelting process).

The use of manganese bearing raw materials in process for producing mechanically durable agglomerates concludes in better strength characteristics, especially if heat-treated. Manganese addition to agglomerates improves solid state reduction significantly and still the refractoriness of the heat-treated agglomerates are high. These advantages improves the capacity of the agglomeration plant and smelting process and lowers the amount of dust formation.

It has also been found that the total porosity of heat-treated agglomerates containing nickel bearing raw material with high content of volatiles such as hydroxides or carbon based volatiles is very high compared to that of agglomerates without nickel bearing materials. This increased porosity improves the reducibility of the heat-treated agglomerates in solid state while reducing gases penetrate inside the agglomerate more easily. In addition, it has been found that molybdenum affects favourably to the matrix of the agglomerate and enhances the reducibility of the all key elements including chromium. The addition of at least one of the following manganese bearing raw material, nickel and/or molybdenum bearing raw materials to agglomeration feed has a very positive effect on the recovery rates of chromium as observed by a higher chromium recovery in the ferrochrome smelting process, and also the recovery of manganese, nickel and molybdenum is high.

For the purpose of this description, the terms relating in "ferrochromium alloy with desired content of manganese, nickel and molybdenum" are abbreviated as "FeCrMn", "FeCrNi", "FeCrMo", "FeCrNiMo", "FeCrMnMo", "FeCrMnNi" and "FeCrMnNiMo". For the purpose of this description, the term "agglomeration feed" stands for a solid mixture which serves as starting material (raw material) for the manufacture of agglomerates in the agglomeration phase; the obtained agglomerates may subsequently be processed to produce heat-treated agglomerates which in turn serve as starting material for the smelting process to obtain FeCr with desired content of manganese, nickel and molybdenum. The agglomerates can be pretreated prior to smelting by known methods such as prereduction or/and preheating. Preferably, the agglomeration feed is a solid mixture such as a ground powder and is pelletized and heat-treated in order to gain sintered pellets. The agglomeration feed can be directed also for producing agglomerates as briquettes.

The target is to produce mechanically durable chromium and iron bearing agglomerates with a desired content of manganese, nickel and molybdenum. The agglomerates are intended to be used in the manufacture of ferroalloy with desired content of iron, chromium, manganese, nickel and molybdenum in a smelting vessel (such as AC, DC, or induction furnaces or in any furnaces were energy is at least partly provided by electricity or by chemical energy).

Preferably, the agglomerates are in the form of pellets, more preferably in the form of sintered pellets.

Preferably, at least one of manganese, nickel and molybdenum bearing raw materials are added to the agglomeration feed.

In the case manganese bearing material is added, a sufficient amount of manganese bearing material is added to provide a manganese content in the agglomeration feed (and in the sintered pellets) that is preferably between 0.01 and 35 wt-%, more preferably between 0.5 and 35 wt-%, even more preferably between 0.5 and 30 wt-%, most preferably between 0.5 and 25 wt-%, such as between 0.5 and 20.0 wt-%.

In the case nickel bearing material is added, a sufficient amount of nickel bearing material is added to provide a nickel content in the agglomeration feed (and in the sintered pellets) is between 0.01 and 30.0 wt-%, preferably between 1 and 30 wt-%, more preferably between 1 and 26 wt-%, most preferably between 1 and 24 wt-%, such as between 1 and 20 wt-%.

In case molybdenum bearing material is added, a sufficient amount of molybdenum bearing material is added to provide a molybdenum content in the agglomeration feed (and in the sintered pellets) is between 0.01 and 30 wt-%, preferably between 1 and 30 wt-%, more preferably between 1 and 10 wt-%, most preferably between 1 and 5 wt-%.

Also, in the case copper bearing material is added, a sufficient amount of copper bearing material is added to provide a copper content in the agglomeration feed (and in the sintered pellets) is between 0.01 and 30 wt-%, more preferably between 0.5 and 30 wt-%, most preferably between 0.5 and 10 wt-%, such as between 0.5 and 5 wt-%.

Also, in the case niobium bearing material is added, a sufficient amount of niobium bearing material is added to provide a niobium content in the agglomeration feed (and in the sintered pellets) is between 0.01 and 30 wt-%, more preferably between 0.5 and 30 wt-%, most preferably between 0.5 and 10 wt-%, such as between 0.5 and 5 wt-%.

All added raw materials used in the process according to the invention may contain certain impurities (typical slag formers), such as $Al_2O_3$, MgO, CaO, $SiO_2$ and similar oxides to these. Similar compounds are also contained in the chromite concentrate and fluxing agents used in the conventional FeCr smelting. Therefore, those impurities need not be removed from the added raw materials when directed to agglomeration feed and corresponding smelting stage. This enables the use of low cost manganese, nickel and molybdenum sources compared to the use of highly refined alloying elements used in traditional stainless steel production, such as FeMn, SiMn, FeNi or FeMo. The consumption of traditional alloying elements is decreased according to the invention.

The manganese-bearing raw material is a solid compound, typically manganese ore or manganese ore concentrate. Manganese may exist as manganese oxide, manganese hydroxide, manganese carbonate, manganese carbide, metallic manganese, manganese sulphide, manganese sulphates, manganese salts or similar compounds and any mixtures of them.

The nickel-bearing raw material is a solid compound which contains at least one of the following such as nickel hydroxides, nickel carbonates, metallic nickel, nickel oxides, nickel sulphides, nickel sulphates, and any mixtures of known nickel salts and any mixture of thereof. The nickel-bearing raw material can contain, for instance, calcinated nickel concentrate from sulfidic ore beneficiation, or an intermediate product from hydrometallurgical process steps of later-itic nickel ore processing or similar compounds and any mixtures of them.

The molybdenum-bearing raw material is a solid compound, typically molybdenum ore or molybdenum ore concentrate. Molybdenum may exist as molybdenumoxide, molybdenumsulphide, molybdenumsulphate, metallic molybdenum, molybdenumhydroxide, molybdenum salts or similar compounds and any mixtures of them.

The copper-bearing raw material is a solid compound, typically copper ore or copper ore concentrate. Copper may exist as copperoxide, coppersulphide, cop-persulphate, metallic copper, copperhydroxide, copper salts or similar compounds and any mixtures of them.

The niobium-bearing raw material is a solid compound, typically niobium ore or niobium ore concentrate. Niobium may exist as niobium oxide, niobium sulphide, niobium sulphate, metallic niobium, niobium hydroxide, niobium salts or similar compounds and any mixtures of them.

Any agglomeration process may be used for this invention such as steel belt sintering, travelling grate pelletizing, shaft kiln sintering, briquetting or any other similar combined process such as SL/RN-Xrta or the method that skilled person can utilize. For vast capacities travelling grate is preferable process and for typical capacities steel belt sintering process is preferable. In this connection, steel belt sintering is used as a reference process. The pelletizing and sintering process is preferably designed so that the manganese, nickel and molybdenum bearing raw material need not to be calcinated separately but the conditions during sintering process is controlled so that calcinations and heat-treatment (sintering) can be carried out at simultaneously in the same process device

The agglomeration feed used in the method according to the invention may contain fluxing agents, such as calcium, silicon, aluminium, magnesium, iron and chromium bearing materials or similar compounds of these and any mixture of them originating from mines, industrial residual/products/fines/dusts, pyrometallurgical slags such as limestone (calcite), bauxite, dolomite, quartz, wollastonite, olivine, blast furnace slags, other metallurgical slags or residuals or side-streams. Depending on the gangue minerals in the iron, chromium, manganese, nickel and molybdenum bearing materials and in the other added materials, fluxing can be used to increase mechanical properties of the heat-treated iron chromium manganese nickel molybdenum bearing agglomerates.

The agglomeration feed used in the method according to the invention also contains binding agent. The binding agent is preferably bentonite. The binding agent is for example needed for achieving the satisfactory strength before heat-treatment.

Preferably, the iron and chromium bearing material is in the form of a chromite concentrate from a beneficiation plant. Preferably, each feed material - i.e. the manganese-bearing raw material, nickel-bearing raw material, molybdenum-bearing raw material, binding agent, possible oxidizable materials, fine carbon-bearing material, chromite, and fluxing agent - is added individually in order to achieve optimal homogenisation of the process mixtures. Fine carbon-bearing material and other oxidizable materials can be used as an additional energy source for the heat-treatment stage. The mixing of the components can take place either before or after a grinding step, depending on their grain size distribution. The agglomeration feed may be prepared to the sequential stages with a known process step and by the way that skilled person can utilize.

Typically, fine raw materials are fed to the mixture after the grinding phase. Feeding the raw materials to the process before grinding is advantageous for following process steps because in this way the raw materials are the most evenly spread in the obtained agglomerates. However, grinding of single components can also be carried out separately, in which case the separately ground components are mixed with each other after grinding. It is also possible to grind any mixture of the components and/or any single component separately, and the separately ground mixtures and/or single components can be mixed with each other after grinding. If the grain size of the agglomeration feed material is fine, it can be fed to the mixer just before the agglomeration. The materials can be ground as a wet or a dry method. The ground material can be moisturized, filtered or dried prior to agglomeration depending on the operation method.

The heat-treatment of the agglomeration feed as a pellet has the agglomerate size of preferably 3-50 mm, more preferably 6-20 mm. The heat-treatment feed is preferably in the form of a green pellet (wet pellet) . The heat-treatment feed can also be in the form of dried pellets, or in form of a mixture containing green pellets (wet pellets) and dried pellets.

The heat-treatment of the agglomeration feed as sinter has the agglomerate size after crushing and screening preferably below 150 mm, more preferably below 100 mm, most preferably below 50 mm. The formation of fines is also possible. The heat-treatment feed is preferably in the form of agglomeration feed together with oxidizable agent, preferably carbon bearing material such as coke to provide energy to the bed. The agglomeration feed can be feed to heat-treatment as moist or dried agglomeration feed or combination of thereof.

The heat-treatment feed is heated to temperature of preferably 1000-1550 °C depending on the characteristics of the feed materials. The heat-treatment feed is heated to temperature of more preferably 1200-1500 °C depending on the characteristics of the feed materials. Higher heat treatment temperatures are required if the feed materials contain low amount of binding silicates forming components or direct bonds forming components or the feed material contain materials with low liquidus point. Lower temperature can be partly/totally compensated by a longer retention time at the desired temperature.

The compressive strength of the heat-treated agglomerates as a form of heat-treated pellets is preferably $\geq 100$ kg/pellet, more preferably $\geq 150$ kg/pellet expressed as $F_{12mm}$ and if pellet size is around 12 mm, then the compressive strength $F_{12mm}$ can be calculated according to the following formula:

$$F_{12mm} = (12 / D)^2 * F_D,$$

where

    D: measured diameter of the pellet [mm];
    12: reference diameter of the desired pellet [mm] ;
    $F_D$: the measured compressive strength of the pellet [kg/pellet].

The heat-treated agglomerates can be used as a starting material for the manufacture of FeCr with desired content of manganese, nickel and molybdenum. In such case, the smelting feed may comprises at least one part of the following: heat-treated iron and chromium bearing pellets with desired content of manganese, nickel and molybdenum , possible iron pellets, possible other iron bearing materials, heat-treated iron and chromium bearing sinter with desired content of manganese, nickel and molybdenum, iron and chromium bearing briquettes with desired content of manganese, nickel and molybdenum, combination of variable chemical composition of mechanically durable iron and chromium bearing pellets/sinter/briquettes with desired manganese, nickel and molybdenum, possible other manganese sources, possible other nickel sources, possible other molybdenum sources, possible lumpy ores, possible other coarse feed material, possible fluxes (quartz, dolomite, limestone, olivine, bauxite or other slag forming materials) and reducing agent(s).

In an embodiment of the process, the agglomeration feed containing in percentages of mass:

- Mn 1.5 to 35 wt-%, preferably 5 to 25 wt-%, more preferably 5 to 20 wt-%
- Ni below 30 wt-%,
- Mo below 30 wt-%,
- Cu below 30 wt-%, and
- Nb below 30 wt-%.

In an embodiment of the process, the agglomeration feed containing in percentages of mass:

- Ni 1.0 to 30 wt-%, preferably 5 to 26 wt-%, more preferably 5 to 24 wt-%, most preferably 5 to 20 wt-%,
- Mn below 35 wt-%,
- Mo below 30 wt-%,
- Cu below 30 wt-%, and
- Nb below 30 wt-%.

In an embodiment of the process, the agglomeration feed containing in percentages of mass:

- Mo 0.5 to 30 wt-%, preferably 1 to 10 wt-%, more preferably 1 to 5 wt-%,
- Mn below 35 wt-%,
- Ni below 30 wt-%,
- Cu below 30 wt-%, and
- Nb below 30 wt-%.

In an embodiment of the process, the agglomeration feed containing in percentages of mass:

- Cu 0.5 to 30 wt-%, preferably 1 to 10 wt-%, more preferably 1 to 5 wt-%,
- Mn below 35 wt-%,
- Ni below 30 wt-%,
- Mo below 30 wt-%, and
- Nb below 30 wt-%.

In an embodiment of the process, the agglomeration feed containing in percentages of mass:

- Nb 0.5 to 30 wt-%, preferably 1 to 10 wt-%, more preferably 1 to 5 wt-%,
- Mn below 35 wt-%,
- Ni below 30 wt-%,
- Mo below 30 wt-%, and
- Cu below 30 wt-%.

In an embodiment of the process, the agglomeration feed containing in percentages of mass:

- Mn 1.0 to 35 wt-%, preferably 5 to 25 wt-%, more preferably 5 to 20 wt-%,
- Ni 1.0 to 30 wt-%, preferably 2 to 26 wt-%, more preferably 2 to 24 wt-%, most preferably 2 to 20 wt-%,
- Mo below 30 wt-%,
- Cu below 30 wt-%, and
- Nb below 30 wt-%.
- 

In an embodiment of the process, the agglomeration feed containing in percentages of mass:

- Mn 1.0 to 35 wt-%, preferably 5 to 25 wt-%, more preferably 5 to 20 wt-%,
- Ni 1.0 to 30 wt-%, preferably 2 to 26 wt-%, more preferably 2 to 24 wt-%, most preferably 2 to 20 wt-%,
- Mo 0.5 to 30 wt-%, preferably 1 to 10 wt-%, more preferably 1 to 5 wt-%,

- Cu below 30 wt-%, and
- Nb below 30 wt-%.
- 

In an embodiment of the process, the agglomeration feed containing in percentages of mass:

- Mn 1.5 to 35 wt-%, preferably 5 to 25 wt-%, more preferably 5 to 20 wt-%
- Ni below 30 wt-%,
- Mo below 30 wt-%,
- Cu below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Ni 1.0 to 30 wt-%, preferably 5 to 26 wt-%, more preferably 5 to 24 wt-%, most preferably 5 to 20 wt-%,
- Mn below 35 wt-%,
- Mo below 30 wt-%,
- Cu below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Mo 0.5 to 30 wt-%, preferably 1 to 10 wt-%, more preferably 1 to 5 wt-%,
- Mn below 35 wt-%,
- Ni below 30 wt-%,
- Cu below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Cu 0.5 to 30 wt-%, preferably 1 to 10 wt-%, more preferably 1 to 5 wt-%,
- Mn below 35 wt-%,
- Ni below 30 wt-%,
- Mo below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Nb 0.5 to 30 wt-%, preferably 1 to 10 wt-%, more preferably 1 to 5 wt-%,
- Mn below 35 wt-%,
- Ni below 30 wt-%,
- Mo below 30 wt-%, and
- Cu below 30 wt-%,
- the balance being Fe, Cr and inevitable impurities such as Ti, V, S, Mg, Ca, Si, and Al.

in an embodiment of the process, the agglomeration feed containing in percentages of mass:

- Mn 1.0 to 35 wt-%, preferably 5 to 25 wt-%, more preferably 5 to 20 wt-%,
- Ni 1.0 to 30 wt-%, preferably 2 to 26 wt-%, more preferably 2 to 24 wt-%, most preferably 2 to 20 wt-%,
- Mo below 30 wt-%,
- Cu below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Mn 1.0 to 35 wt-%, preferably 5 to 25 wt-%, more preferably 5 to 20 wt-%,
- Ni 1.0 to 30 wt-%, preferably 2 to 26 wt-%, more preferably 2 to 24 wt-%, most preferably 2 to 20 wt-%,
- Mo 0.5 to 30 wt-%, preferably 1 to 10 wt-%, more preferably 1 to 5 wt-%,
- Cu below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Mn 0.2 to 25 wt-%, preferably 0.2 to 12 wt-%, more preferably 0.2 to 6 wt-%
- Ni 0.2 to 12 wt-%, preferably 0.2 to 8 wt-%, more preferablöy 0.2 to 6.4 wt-%
- Mo bellow 30 wt-%, and
- Nb below 30 wt-%,
- the balance being Fe, Cr and inevitable impurities such as Ti, V, S, Mg, Ca, Si, and Al.

One reason for using the selected manganese content is that a high compressive strength is achieved at a low heat-treatment temperature, which means that the energy needed in the heat-treatment is low. Additionally, cheap manganese sources can be utilized in the production of certain stainless steels. Manganese also replaces expensive nickel in (austenic) stainless steel. Both magnanese and nickel in FeCr lowers the liquidus point of the ferroalloy. A high Manganese amount enhances reducibility of the heat treated agglomerates

One reasons for using the selected nickel content is that every added nickel enhances the process chain. A Higher amount of nickel is not needed, because manganese bearing stainless steels are to replace nickel. However, higher nickel amounts are suitable. Additionally low cost nickel bearing material can be used to produce metallic Ni into ferroalloy.

In an embodiment of the process, the agglomeration feed containing in percentages of mass:

- Mn 2 to 25 wt-%, preferably 3-20 wt-%, more preferably 7-18 wt-%
- Ni 0.2 to 12 wt-%, preferably 0.2-8 wt-%, more preferably 0.2-6.4 wt-%
- Mo below 30 wt-%,
- Cu below 30 wt-%, and
- Nb below 30 wt-%,
- the balance being Fe, Cr and inevitable impurities such as Ti, V, S, Mg, Ca, Si, and Al.

In an embodiment of the process, the agglomeration feed containing in percentages of mass:

- Mn 0.2 to 10 wt-%, preferably 0.2 to 9 wt-%
- Ni 2 to 25 wt-%, preferably 2 to 15 wt-%, more preferably 1 to 12 wt-%,
- Mo 0.5 to 30 wt-%, preferably 1 to 10 wt-%, more preferably 1 to 5 wt-%,
- Cu below 30 wt-%, and
- Nb below 30 wt-%,
- the balance being Fe, Cr and inevitable impurities such as Ti, V, S, Mg, Ca, Si, and Al.

One reason for using the selected manganese content is that in basic austenitic steels, the manganese content has limits. Therefore, it is preferable to limit active addition of Manganase in FeCrNi(Mn) to certain amount. However, every added manganese has benefit in the process chain of producing ferroalloy. Adding manganese minimizes the need of additional fluxes. Together with nickel into ferrochromium alloy, manganese decreases the liquidus of the metal.

One reasons for using the selected nickel content is that nickel mixed and bound together with iron and chromium bearing material is advantageous and enhances the process, especially in the reducing stage. Additionally, a vast amount of stainless steel contains nickel as a base metal and every added nickel amount is preferable for the whole process chain.

In the process, it is possible that the chromium bearing raw material is not 100 % chromium, that the iron bearing raw material is not 100 % iron, that the optional manganese bearing raw material is not 100 % manganese, that the optional nickel bearing raw material is not 100 % nickel, that the optional molybdenum bearing raw material is not 100 % molybdenum, the optional copper bearing raw material is not 100 % copper, and that the optional niobium bearing raw material is not 100 % niobium, which means that any one of said raw materials can contain other elements and in some cases these elements can be stated to be impurities leading to that the agglomeration feed will consequently contain additionally other elements as impurities, i.e. components which are not actively added to the agglomeration feed. These other elements as impurities in some cases can varied in the composition from couple of part of million to several procentages of the added material. For example chromium bearing material can also contain some manganese within concluding that the materials can contain simultaneously several elements both as desired and as impurities.

## EXAMPLE 1

Sintered pellets were produced from a mixture of ground chromite concentrate and manganese ore (low volatile). The amount of manganese ore added to the ground chromite concentrate was 30 wt-% of total weight of the chromite and manganese ore mixture. With this composition, no fluxes are needed to improve mechanical properties.

The moisture content of green pellets produced in bench scale was 7.0 %.

The strength of the green pellet was 1.2 kg with 12 mm pellet size. The corresponding strength of the dried pellet was 14.7 kg/pellet.

The strength of the sintered pellets was 314 kg with 12 mm pellet size.

The manganese content of the sintered pellets was 14.7 wt-%.

The total porosity of sintered pellets was 24.7 %.

The reducibility in solid state was tested with thermogravimetric analyzer at high temperature under reducing conditions. The metallization degree of the sintered pellet was 88.5 %. As a comparison, the result for a typical chromite sintered pellet was 35-40 %, respectively.

## EXAMPLE 2

Sintered pellets were produced from a mixture of ground chromite concentrate, manganese ore concentrate (low volatile), and fine nickel hydroxide powder (received from a hydrometallurgical process) . The amount of manganese concentrate and nickel hydroxide added to the ground chromite concentrate was 20 wt-% and 10 wt-% of total weight of the chromite, manganese ore and nickel hydroxide mixture, respectively. With this composition, no fluxes are needed to improve mechanical properties.

The moisture content of green pellets produced in bench scale was 8.1 %.

The strength of the green pellet was 1.3 kg with 12 mm pellet size. The corresponding strength of the dried pellet was 6.7 kg/pellet.

The strength of the sintered pellets was 280 kg with 12 mm pellet size.

The manganese and nickel contents of the sintered pellets were 10.9 wt-% and 3.7 wt-%, respectively.

The total porosity of sintered pellets was 36.8 %.

The reducibility in solid state was tested with thermogravimetric analyzer at high temperature under reducing conditions. The metallization degree of the sintered pellet was 54.2 %. As a comparison, the result for a typical chromite sintered pellet was 35-40 %, respectively.

## EXAMPLE 3

Sintered pellets were produced from a mixture of ground chromite concentrate and fine nickel hydroxide powder (received from a hydrometallurgical process). The amount nickel hydroxide added to the ground chromite concentrate was 20 wt-% of total weight of the chromite and nickel hydroxide mixture. With this composition, no fluxing, a conventional amount of fluxes (5 wt-% of calcite) and novel amount of fluxes (3 wt-% wollastonite and 2 wt-% calcite) were used.

The strength of the sintered pellets with no fluxing was 142 kg with 12 mm pellet size.

The strength of the sintered pellets with a conventional fluxing (5 wt-% calcite) was 157 kg with 12 mm pellet size.

The strength of the sintered pellets with a conventional fluxing (3 wt-% wollastonite and 2 wt-% calcite) was 200 kg with 12 mm pellet size.

## EXAMPLE 4

Sintered pellets were produced from a mixture of ground chromite concentrate and fine molybdenum oxide. The amount of molybdenum oxide to the ground chromite concentrate was 20 wt-% of total weight of the chromite, manganese ore and nickel hydroxide mixture, respectively. In this example, no fluxes were used (but they are possible to use) to improve mechanical properties.

The moisture content of green pellets produced in bench scale was 6.2 %.

The strength of the green pellet was 0.5 kg with 12 mm pellet size. The corresponding strength of the dried pellet was 24.6 kg/pellet.

The strength of the sintered pellets was 149 kg with 12 mm pellet size.

The molybdenum content of the sintered pellets was 10.7 wt-%.

The reducibility in solid state was tested with thermogravimetric analyzer at high temperature under reducing conditions. The metallization degree of the sintered pellet was 51.4 %. As a comparison, the result for a typical chromite sintered pellet was 35-40 %, respectively.

**Claims**

1. Process for manufacturing chromium and iron bearing agglomerates with desired content of manganese, nickel and molybdenum, comprising the steps of:

   - providing an agglomeration feed comprising chromium bearing raw material and iron bearing raw material, binding agent and at least one of the following: manganese bearing raw material, nickel bearing raw material and molybdenum bearing raw material;
   - the agglomeration feed containing chromium bearing raw material and iron bearing raw material in an amount sufficient to provide iron content between 5 and 70 wt-% in the agglomeration feed and sufficient to provide chromium content between 5 and 50 wt-% in the agglomeration feed; and
   - agglomerating the agglomeration feed to obtain agglomerates, **characterized in that** the agglomeration feed contains
   - manganese bearing raw material in an amount sufficient to provide manganese content between 0.01 and 35 wt-% in the agglomeration feed, and
   - nickel bearing raw material in an amount sufficient to provide nickel content between 0.01 and 30 wt-% in the agglomeration feed.

2. The process according to claim 1, wherein the agglomeration feed containing manganese bearing raw material in an amount sufficient to provide manganese content between 0.5 and 35 wt-% in the agglomeration feed, more preferably between 0.5 and 30 wt-% in the agglomeration feed, most preferably between 0.5 and 25 wt-% in the agglomeration feed, such as between 0.5 and 20 wt-% in the agglomeration feed.

3. The process according to any of the claims 1 or 2, wherein the agglomeration feed containing nickel bearing raw material in an amount sufficient to provide nickel content between 1 and 30 wt-% in the agglomeration feed, more preferably between 1 and 26 wt-% in the agglomeration feed, most preferably between 1 and 24 wt-% in the agglomeration feed, such as between 1 and 20 wt-% in the agglomeration feed.

4. The process according to any of the claims 1 to 3, wherein the agglomeration feed also contain carbon bearing material in an amount $C_{fix}$ < 10 %, more preferably < 4 %.

5. The process according to one or more of claims 1 to 4, wherein the agglomeration feed contain oxidizable agent such as millscale, ferroalloy fines or metallic elements like aluminium.

6. The process according to one or more of claims 1 to 5, wherein the agglomeration feed also contain fluxing agent.

7. The process according to claim 6, wherein wollastonite is used as the fluxing agent and the amount of wollastonite is 0.5-10 wt-%, more preferably 0-3 wt-% of the agglomeration feed.

8. The process according to claim 6, wherein limestone is used as the fluxing agent and the amount of limestone is 0.5-8 wt-%, more preferably 0-3 wt-% of the agglomeration feed.

9. The process according to claim 6, wherein the combination of calcium and silicon bearing materials such limestone and wollastonite are used as the fluxing agent and the total amount of fluxes is 0.5-10 wt-%, more preferably 0.5-5 wt-% of the mixture of the agglomeration feed.

10. The process according to one or more of claims 1 to 9, wherein the agglomeration feed containing copper-bearing raw material in an amount sufficient to provide copper content between 0.01 and 30 wt-% in the agglomeration feed, preferably between 0.5 and 30 wt-% in the agglomeration feed, more preferably between 0.5 and 10 wt-% in the agglomeration feed, most preferably between 0.5 and 5 wt-% in the agglomeration feed.

11. The process according to one or more of claims 1 to 10, wherein the agglomeration feed containing niobium-bearing raw material in an amount sufficient to provide niobium content between 0.01 and 30 wt-% in the agglomeration feed, preferably between 0.5 and 30 wt-% in the agglomeration feed, more preferably between 0.5 and 10 wt-% in the agglomeration feed, most preferably between 0.5 and 5 wt-% in the agglomeration feed.

12. The process according to one or more of claims 1 to 11, wherein the agglomeration feed containing molybdenum-bearing raw material in an amount to provide molybdenum content between 0.01 and 30 wt-% in the agglomeration feed, preferably between 1 and 30 wt-% in the agglomeration feed, more preferable between 1 and 10 wt-% in the agglomeration feed, most preferable between 1 and 5 wt-% in the agglomeration feed.

13. The process according to any of the claims 1 to 12, wherein the agglomeration feed containing iron bearing raw material to provide iron content between 15 and 45 wt-% in the agglomeration feed, preferable between 18 and 42 wt-% in the agglomeration feed, more preferable between 20 and 40 wt-% in the agglomeration feed.

14. The process according to any of the claims 1 to 13, wherein the agglomeration feed containing chromium bearing raw material in an amount sufficient to provide chromium content between 10 and 35 wt-% in the agglomeration feed, preferable between 15 and 30 wt-% in the agglomeration feed.

15. The process according to any of the claims 1 to 14, wherein the agglomeration feed is subjected to agglomerating in the form of pelletizing to obtain agglomerates in the form of green pellets.

16. The process according to any of the claims 1 to 15, wherein the agglomeration feed is subjected to agglomerating in the form of pelletizing and in the form of heat treatment to obtain agglomerates in the form of sintered pellets.

17. The process according to any of the claims 1 to 15, wherein the agglomeration feed is subjected to agglomerating in the form of sintering to obtain agglomerates in the form of sinter.

18. The process according to any of the claims 1 to 15, wherein the agglomeration feed is subjected to agglomerating in the form of briquetting to obtain agglomerates in the form of briquettes.

**Patentansprüche**

1. Verfahren zur Herstellung von chrom- und eisenhaltigen Agglomeraten mit einem gewünschtem Gehalt von Mangan, Nickel und Molybdän, umfassend die folgenden Schritte:

- Bereitstellen einer Agglomerationszufuhr, umfassend chromhaltiges Rohmaterial und eisenhaltiges Rohmaterial, Bindemittel und wenigstens eines von den Folgenden: manganhaltiges Rohmaterial, nickelhaltiges Rohmaterial und molybdänhaltiges Rohmaterial;
- wobei die Agglomerationszufuhr chromhaltiges Rohmaterial und eisenhaltiges Rohmaterial in einer Menge enthält, die ausreichend ist, um einen Eisengehalt zwischen 5 und 70 Gewichts-% in der Agglomerationszufuhr bereitzustellen, und ausreichend ist, um einen Chromgehalt zwischen 5 und 50 Gewichts-% in der Agglomerationszufuhr bereitzustellen; und
- Agglomerieren der Agglomerationszufuhr, um Agglomerate zu erhalten, **dadurch gekennzeichnet, dass** die Agglomerationszufuhr Folgendes enthält:
- manganhaltiges Rohmaterial in einer Menge, die ausreichend ist, um einen Mangangehalt zwischen 0.01 und 35 Gewichts-% in der Agglomerationszufuhr bereitzustellen, und
- nickelhaltiges Rohmaterial in einer Menge, die ausreichend ist, um einen Nickelgehalt zwischen 0.01 und 30 Gewichts-% in der Agglomerationszufuhr bereitzustellen.

2. Verfahren nach Anspruch 1, wobei die Agglomerationszufuhr manganhaltiges Rohmaterial in einer Menge enthält, die ausreichend ist, um einen Mangangehalt zwischen 0.5 und 35 Gewichts-% in der Agglomerationszufuhr bereitzustellen, weiter bevorzugt zwischen 0.5 und 30 Gewichts-% in der Agglomerationszufuhr, am meisten bevorzugt zwischen 0.5 und 25 Gewichts-% in der Agglomerationszufuhr, beispielsweise zwischen 0.5 und 20 Gewichts-% in der Agglom erationszufuhr.

3. Verfahren nach einem der Ansprüche 1 oder 2, wobei die Agglomerationszufuhr nickelhaltiges Rohmaterial in einer Menge enthält, die ausreichend ist, um einen Nickelgehalt zwischen 1 und 30 Gewichts-% in der Agglomerationszufuhr bereitzustellen, weiter bevorzugt zwischen 1 und 26 Gewichts-% in der Agglomerationszufuhr, am meisten bevorzugt zwischen 1 und 24 Gewichts-% in der Agglomerationszufuhr, beispielsweise zwischen 1 und 20 Gewichts-% in der Agglomerationszufuhr.

4. Verfahren nach einem der Ansprüche 1 bis 3, wobei die Agglomerationszufuhr ferner kohlenstoffhaltiges Material in einer Menge $C_{fix}$ < 10%, weiter bevorzugt < 4%, enthält.

5. Verfahren nach einem oder mehr der Ansprüche 1 bis 4, wobei die Agglomerationszufuhr ein oxidierbares Mittel enthält wie zum Beispiel Walzsinter, Ferrolegierungsfeinerz oder metallische Elemente wie Aluminium.

6. Verfahren nach einem oder mehr der Ansprüche 1 bis 5, wobei die Agglomerationszufuhr ferner ein Flussmittel enthält.

7. Verfahren nach Anspruch 6, wobei Wollastonit als das Flussmittel verwendet wird, und die Menge von Wollastonit 0.5 bis 10 Gewichts-%, weiter bevorzugt 0 bis 3 Gewichts-% der Agglomerationszufuhr ist.

8. Verfahren nach Anspruch 6, wobei Kalkstein als das Flussmittel verwendet wird, und der Gehalt von Kalkstein 0.5 bis 8 Gewichts-%, weiter bevorzugt 0 bis 3 Gewichts-% der Agglomerationszufuhr ist.

9. Verfahren nach Anspruch 6, wobei die Kombination von kalzium- und siliziumhaltigen Materialien wie Kalkstein und Wollastonit als das Flussmittel verwendet wird, und die Gesamtmente von Flussmitteln 0.5 bis 10 Gewichts-%, weiter bevorzugt 0.5 bis 5 Gewichts-% der Mischung der Agglomerationszufuhr ist.

10. Verfahren nach einem oder mehr der Ansprüche 1 bis 9, wobei die Agglomerationszufuhr kupferhaltiges Rohmaterial in einer Menge enthält, die ausreichend ist, um einen Kupfergehalt zwischen 0.01 und 30 Gewichts-% in der Agglomerationszufuhr bereitzustellen, bevorzugt zwischen 0.5 und 30 Gewichts-% in der Agglomerationszufuhr, weiter bevorzugt zwischen 0.5 und 10 Gewichts-% in der Agglomerationszufuhr, am meisten bevorzugt zwischen 0.5 und 5 Gewichts-% in der Agglomerationszufuhr.

11. Verfahren nach einem oder mehr der Ansprüche 1 bis 10, wobei die Agglomerationszufuhr niobhaltiges Rohmaterial in einer Menge enthält, die ausreichend ist, um einen Niobgehalt zwischen 0.01 und 30 Gewichts-% in der Agglomerationszufuhr bereitzustellen, bevorzugt zwischen 0.5 und 30 Gewichts-% in der Agglomerationszufuhr, weiter bevorzugt zwischen 0.5 und 10 Gewichts-% in der Agglomerationszufuhr, am meisten bevorzugt zwischen 0.5 und 5 Gewichts-% in der Agglomerationszufuhr.

12. Verfahren nach einem oder mehr der Ansprüche 1 bis 11, wobei die Agglomerationszufuhr molybdänhaltiges Rohmaterial in einer Menge enthält, um einen Molybdängehalt zwischen 0.01 und 30 Gewichts-% in der Agglomerationszufuhr bereitzustellen, bevorzugt zwischen 1 und 30 Gewichts-% in der Agglomerationszufuhr, weiter bevorzugt zwischen 1 und 10 Gewichts-% in der Agglomerationszufuhr, am meisten bevorzugt zwischen 1 und 5 Gewichts-% in der Agglomerationszufuhr.

13. Verfahren nach einem der Ansprüche 1 bis 12, wobei die Agglomerationszufuhr eisenhaltiges Rohmaterial enthält, um einen Eisengehalt zwischen 15 und 45 Gewichts-% in der Agglomerationszufuhr bereitzustellen, vorzugsweise zwischen 18 und 42 Gewichts-% in der Agglomerationszufuhr, weiter bevorzugt zwischen 20 und 40 Gewichts-% in der Agglomerationszufuhr.

14. Verfahren nach einem der Ansprüche 1 bis 13, wobei die Agglomerationszufuhr chromhaltiges Rohmaterial in einer Menge enthält, die ausreichend ist, um einen Chromgehalt zwischen 10 und 35 Gewichts-% in der Agglomerationszufuhr bereitzustellen, vorzugsweise zwischen 15 und 30 Gewichts-% in der Agglomerationszufuhr.

15. Verfahren nach einem der Ansprüche 1 bis 14, wobei die Agglomerationszufuhr einer Agglomerierung in der Form einer Pelletisierung unterzogen wird, um Agglomerate in der Form von Grünpellets zu erhalten.

16. Verfahren nach einem der Ansprüche 1 bis 15, wobei die Agglomerationszufuhr einer Agglomerierung in der Form einer Pelletisierung und in der Form einer Wärmebehandlung unterzogen wird, um Agglomerate in der Form von gesinterten Pellets zu erhalten.

17. Verfahren nach einem der Ansprüche 1 bis 15, wobei die Agglomerationszufuhr einer Agglomerierung in der Form einer Sinterung unterzogen wird, um Agglomerate in der Form von Sinter zu erhalten.

**18.** Verfahren nach einem der Ansprüche 1 bis 15, wobei die Agglomerationszufuhr einer Agglomerierung in der Form einer Brikettierung unterzogen wird, um Agglomerate in der Form von Briketts zu erhalten.

**Revendications**

**1.** Procédé de fabrication d'agglomérats porteurs de chrome et de fer ayant une teneur souhaitée en manganèse, en nickel et en molybdène, comprenant les étapes consistant à :

- utiliser une charge d'agglomération comprenant une matière première porteuse de chrome et une matière première porteuse de fer, un agent de liaison et au moins l'une des matières premières suivantes : une matière première porteuse de manganèse, une matière première porteuse de nickel et une matière première porteuse de molybdène ;
- la charge d'agglomération contenant une matière première porteuse de chrome et une matière première porteuse de fer en une quantité suffisante pour obtenir une teneur en fer s'inscrivant dans une plage de 5 à 70 % en poids de la charge d'agglomération et suffisante pour obtenir une teneur en chrome s'inscrivant dans une plage de 5 à 50 % en poids de la charge d'agglomération ; et
- agglomérer la charge d'agglomération pour obtenir des agglomérats, **caractérisé en ce que** la charge d'agglomération contient
- une matière première porteuse de manganèse en une quantité suffisante pour obtenir une teneur en manganèse s'inscrivant dans une plage de 0,01 à 35 % en poids de la charge d'agglomération, et
- une matière première porteuse de nickel en une quantité suffisante pour obtenir une teneur en nickel s'inscrivant dans une plage de 0,01 à 30 % en poids de la charge d'agglomération.

**2.** Procédé selon la revendication 1, dans lequel la charge d'agglomération contient une matière première porteuse de manganèse en une quantité suffisante pour obtenir une teneur en manganèse s'inscrivant dans une plage de 0,5 à 35 % en poids de la charge d'agglomération, préférablement comprise entre 0,5 et 30 % en poids de la charge d'agglomération, plus préférablement entre 0,5 et 25 % en poids de la charge d'agglomération, telle que s'inscrivant dans une plage de 0,5 à 20 % en poids de la charge d'agglomération.

**3.** Procédé selon l'une ou l'autre des revendications 1 et 2, dans lequel la charge d'agglomération contient une matière première porteuse de nickel en une quantité suffisante pour obtenir une teneur en nickel s'inscrivant dans une plage de 1 à 30 % en poids de la charge d'agglomération, préférablement comprise entre 1 et 26 % en poids de la charge d'agglomération, plus préférablement entre 1 et 24 % en poids de la charge d'agglomération, telle que s'inscrivant dans une plage de 1 à 20 % en poids de la charge d'agglomération.

**4.** Procédé selon l'une quelconque des revendications 1 à 3, dans lequel la charge d'agglomération contient également une matière porteuse de carbone en une quantité $C_{fix}$ < 10 %, plus idéalement < 4 %.

**5.** Procédé selon une ou plusieurs des revendications 1 à 4, dans lequel la charge d'agglomération contient un agent oxydable tel que des battitures, des fines de ferroalliage ou des éléments métalliques comme de l'aluminium.

**6.** Procédé selon une ou plusieurs des revendications 1 à 5, dans lequel la charge d'agglomération contient également un fondant.

**7.** Procédé selon la revendication 6, dans lequel de la wollastonite est utilisée en tant que le fondant et la quantité de wollastonite s'inscrit dans une plage de 0,5 à 10 % en poids, de préférence de 0 à 3 % en poids de la charge d'agglomération.

**8.** Procédé selon la revendication 6, dans lequel de la castine est utilisée en tant que le fondant et la quantité de castine s'inscrit dans une plage de 0,5 à 8 % en poids, de préférence de 0 à 3 % en poids de la charge d'agglomération.

**9.** Procédé selon la revendication 6, dans lequel la combinaison de matières premières porteuses de calcium et de silicium telle que la castine et la wollastonite est utilisée en tant que le fondant et la quantité totale de fondants s'inscrit dans une plage de 0,5 à 10 % en poids, de préférence de 0,5 à 5 % en poids du mélange de la charge d'agglomération.

**10.** Procédé selon une ou plusieurs des revendications 1 à 9, dans lequel la charge d'agglomération contient une matière première porteuse de cuivre en une quantité suffisante pour obtenir une teneur en cuivre s'inscrivant dans une plage de 0,01 à 30 % en poids de la charge d'agglomération, préférablement comprise entre 0,5 et 30 % en poids de la charge d'agglomération, plus préférablement entre 0,5 et 10 % en poids de la charge d'agglomération, plus préférablement comprise entre 0,5 et 5 % en poids de la charge d'agglomération.

11. Procédé selon une ou plusieurs des revendications 1 à 10, dans lequel la charge d'agglomération contient une matière première porteuse de niobium en une quantité suffisante pour obtenir une teneur en niobium s'inscrivant dans une plage de 0,01 à 30 % en poids de la charge d'agglomération, préférablement comprise entre 0,5 et 30 % en poids de la charge d'agglomération, plus préférablement entre 0,5 et 10 % en poids de la charge d'agglomération, plus préférablement comprise entre 0,5 et 5 % en poids de la charge d'agglomération.

12. Procédé selon une ou plusieurs des revendications 1 à 11, dans lequel la charge d'agglomération contient une matière première porteuse de molybdène en une quantité permettant d'obtenir une teneur en molybdène s'inscrivant dans une plage de 0,01 à 30 % en poids de la charge d'agglomération, préférablement comprise entre 1 et 30 % en poids de la charge d'agglomération, plus préférablement entre 1 et 10 % en poids de la charge d'agglomération, plus préférablement comprise entre 1 et 5 % en poids de la charge d'agglomération.

13. Procédé selon l'une quelconque des revendications 1 à 12, dans lequel la charge d'agglomération contient une matière première porteuse de fer permettant d'obtenir une teneur en fer s'inscrivant dans une plage de 15 à 45 % en poids de la charge d'agglomération, préférablement comprise entre 18 et 42 % en poids de la charge d'agglomération, plus préférablement entre 20 et 40 % en poids de la charge d'agglomération.

14. Procédé selon l'une quelconque des revendications 1 à 13, dans lequel la charge d'agglomération contient une matière première porteuse de chrome en une quantité suffisante pour obtenir une teneur en chrome s'inscrivant dans une plage de 10 à 35 % en poids de la charge d'agglomération, de préférence comprise entre 15 et 30 % en poids de la charge d'agglomération.

15. Procédé selon l'une quelconque des revendications 1 à 14, dans lequel la charge d'agglomération est soumise à une agglomération sous la forme d'une pelletisation pour obtenir des agglomérats sous la forme de pellets verts.

16. Procédé selon l'une quelconque des revendications 1 à 15, dans lequel la charge d'agglomération est soumise à une agglomération sous la forme d'une pelletisation et sous la forme d'un traitement thermique pour obtenir des agglomérats sous la forme de pellets frittés.

17. Procédé selon l'une quelconque des revendications 1 à 15, dans lequel la charge d'agglomération est soumise à une agglomération sous la forme d'un frittage pour obtenir des agglomérats sous la forme d'un aggloméré.

18. Procédé selon l'une quelconque des revendications 1 à 15, dans lequel la charge d'agglomération est soumise à une agglomération sous la forme d'un briquetage pour obtenir des agglomérats sous la forme de briquettes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010092234 A1
- WO 2015092138 A1
- WO 2015092136 A1
- CN 10366790 B
- US 2014037489 A1